# EUROPEAN PATENT SPECIFICATION

(11) **EP 3 381 781 B1**
(45) Date of publication and mention of the grant of the patent: **14.07.2021**
(21) Application number: 18160845.6
(22) Date of filing: 09.03.2018
(51) Int. Cl.: B62K 11/04, B62K 19/28

(54) **BODY STRUCTURE OF SADDLE RIDING VEHICLE**
KAROSSERIESTRUKTUR EINES SATTELFAHRZEUGS
STRUCTURE DE CARROSSERIE DE VÉHICULE À SELLE

(30) Priority: 27.03.2017 JP 2017061757
(43) Date of publication of application: 03.10.2018
(73) Proprietor: HONDA MOTOR CO., LTD., Tokyo 107-8556 (JP)
(72) Inventor: MATSUSHIMA, Satoshi, SAITAMA, 351-0193 (JP)
(74) Representative: Augarde, Eric

(56) References cited:
- EP-A1- 2 711 273
- EP-A1- 2 860 093
- EP-A1- 3 009 337
- EP-A1- 3 015 353
- WO-A1-2014/144224
- WO-A2-2013/019727
- US-A- 4 260 170
- US-A1- 2004 124 024
- US-A1- 2009 272 593

## Description

### BACKGROUND OF THE INVENTION

### Field of the Invention

The present invention relates to a body structure of a saddle riding vehicle.

### Description of Related Art

In a related art, for example, a body structure of a saddle riding vehicle disclosed in Japanese Unexamined Patent Application, First Publication No. 2016-78644 is known.

Japanese Unexamined Patent Application, First Publication No. 2016-78644 discloses a box-shaped structure having a space mostly closed by a head pipe, a main frame, a down frame, a stiffener frame, a side plate-shaped member, and an upper plate-shaped member. Since the box-shaped structure is lightweight and has high rigidity due to its box shape, an upper section or the like of the down frame can be reinforced while suppressing an increase in a weight of a vehicle.

The document EP 3 015 353 A1 shows a body structure of a saddle riding vehicle with side gussets according to claim 1. In difference to the present invention, this document does not show a structure with left and right frames and it does not show a vehicle component disposed in the internal space between the gussets.

### SUMMARY OF THE INVENTION

However, there is a room for improvement in that traveling air is used for cooling of vehicle components installed in a vehicle.

An aspect of the present invention is to provide a body structure of a saddle riding vehicle capable of utilizing traveling air for cooling vehicle components.
(1) A body structure of a saddle riding vehicle according to an aspect of the present invention includes the features of claim 1.
(2) In the aspect of (1), the internal space may have an open part opened in at least one of the forward/rearward direction, a leftward/rightward direction, and an upward direction such that the vehicle component is able to be disposed therein.
(3) In the aspect of (1) or (2), an electrical component serving as the vehicle component may be installed in the internal space, and a harness may be installed so as to pass through the opening section of the side gusset.
(4) In the aspect of any one of (1) to (3), a rear end flange curved inward in the vehicle width direction may be formed on a rear end of the side gusset.
(5) In the aspect of any one of (1) to (4), a main frame welded section serving as a welded section of the side gusset with respect to the pair of left and right main frames may be formed, a down frame welded section serving as a welded section of the side gusset with respect to the down frame may be formed, and a length of the down frame welded section may be larger than that of the main frame welded section.
(6) In the aspect of any one of (1) to (5), a fuel tank and an upper gusset connected to an upper section of the head pipe may be further provided, wherein an electrical component serving as the vehicle components may be installed in the internal space, the fuel tank may be installed to cover a rear side of the electrical component, and a fuel tank attachment section to which the fuel tank is attachable may be formed on the upper gusset.

According to the aspect of (1), as the opening sections opened in the forward/rearward direction are formed in the side gussets, traveling air can be efficiently taken into an inner side (a rear side) of the vehicle. For this reason, vehicle components installed between the pair of left and right side gussets in the vehicle width direction can be cooled using the traveling air without installing an additional air guide member. Accordingly, the traveling air can be utilized for cooling the vehicle components. In addition, as the internal space is made between the pair of left and right side gussets in the vehicle width direction, the vehicle body structure can be reduced in weight in comparison with the case in which a space between the pair of left and right side gussets in the vehicle width direction is configured solidly. In addition, as the vehicle components are installed in the internal space, the vehicle can be reduced in size in comparison with the case in which the vehicle components are installed outside the side gussets. In addition, the head pipe and the pair of left and right side gussets can be utilized as protective members for the vehicle components. In addition, as the inwardly curved opening section-side flanges are formed on the outer circumferential edges of the opening sections of the side gussets, since a section modulus of the side gussets can be increased, rigidity of the side gussets can be improved. In addition, when the harness passing through the opening sections of the side gussets is provided, the opening section-side flanges can be utilized as a protective member for the harness.

According to the aspect of (2), as the internal space has the open part opened in at least one of the forward/rearward direction, the leftward/rightward direction, and the upward direction such that the vehicle components can be disposed therein, the vehicle components can be easily disposed in the internal space through the open part in comparison with the case in which the internal space is almost closed (for example, when the space except for a place communicated with the opening section is closed).

According to the aspect of (3), as the electrical components serving as the vehicle components are installed in the internal space, the traveling air can be utilized for cooling the electrical components. In addition, as the harness passing through the opening sections of the side gusset is provided, since the opening sections function as a harness guide, the number of parts can be reduced without a necessity of installation of an additional guide member of the harness.

According to the aspect of (4), as the inwardly curved rear end flange is formed on the rear end of the side gusset, since a section modulus of the side gusset can be increased, rigidity of the side gusset can be improved.

According to the aspect of (5), when the section of the side gusset welded to the pair of left and right main frames extending rearward from the head pipe while being branched to the left and right sides is set as the main frame welded section and the section of the side gusset welded to the one down frame extending downward from the head pipe is set as the down frame welded section, as the down frame welded section is longer than the main frame welded section, since rigidity of the pair of left and right main frames and the one down frame can be equalized, an input load from the head pipe can be distributed between the main frame and the down frame with better balance than in the case in which the down frame welded section is smaller than or equal to the main frame welded section.

According to the aspect of (6), as the fuel tank configured to cover the rear of the electrical component is provided while installing the electrical component serving as the vehicle component in the internal space, the traveling air can be utilized for cooling the fuel tank in addition to cooling the electrical component. In addition, as the fuel tank attachment section to which the fuel tank can be attached is installed on the upper gusset connected to the upper section of the head pipe, the upper gusset can be utilized as an attachment section for the fuel tank while being utilized as a protective member for the electrical components. In addition, in the fuel tank attachment section of the upper gusset, since a fastening member is unnecessary when a structure into which the fuel tank is inserted is provided, the amount of fastening work can be reduced.

### BRIEF DESCRIPTION OF THE DRAWINGS

FIG. 1 is a right side view of a motorcycle according to an embodiment of the present invention.
FIG. 2 is a front view of a body structure of the motorcycle.
FIG. 3 is a right side view of the body structure of the motorcycle including a cross section taken along line III-III in FIG. 2.
FIG. 4 is a perspective view of the body structure of the motorcycle.
FIG. 5 is a right side view showing a welded section of a side gusset of the body structure of the motorcycle.
FIG. 6 is a right side view of a body structure of a motorcycle according to a variant of the embodiment.
FIG. 7 is a plan view of the body structure of the motorcycle according to the variant of the embodiment when seen in an axial direction of a head pipe.
FIG. 8 is a perspective view of the body structure of the motorcycle according to the variant of the embodiment.

### DETAILED DESCRIPTION OF THE INVENTION

Hereinafter, an embodiment of the present invention will be described with reference to the accompanying drawings. Further, directions of forward, rearward, leftward, rightward, and the like described below are the same as directions in a vehicle described below unless the context clearly indicates otherwise. In addition, in appropriate places in the drawings used in the following description, an arrow FR showing a forward direction with respect to a vehicle, an arrow LH showing a leftward direction with respect to the vehicle, and an arrow UP showing an upward direction with respect to the vehicle are provided.

### <Entire vehicle>

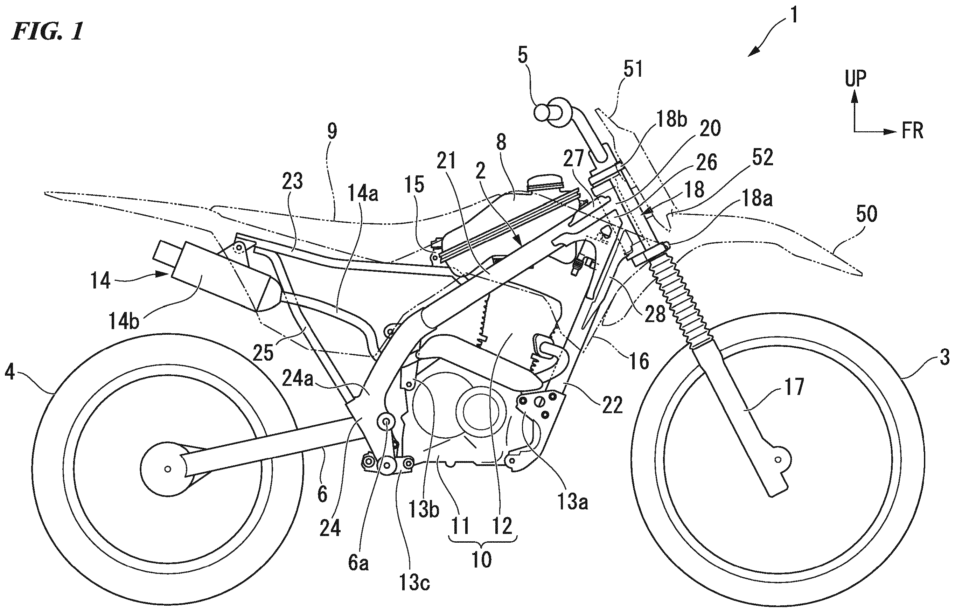

FIG. 1 shows a motorcycle 1 serving as an example of a saddle riding vehicle. Referring to FIG. 1, the motorcycle 1 includes a front wheel 3 steered by a handle 5, and a rear wheel 4 driven by a power unit 10 including an engine. The motorcycle 1 according to the embodiment is an off-road type motorcycle.

Hereinafter, the motorcycle may be simply referred to as a "vehicle."

Steering system parts including the handle 5 and the front wheel 3 are steerably and axially supported by a head pipe 20 formed on a front end portion of a vehicle body frame 2. For example, the handle 5 is a bar handle manufactured by bending a cylindrical metal handle pipe. A handle steering shaft connected to the handle 5 is inserted into the head pipe 20. The power unit 10 is disposed on a central section of the vehicle body frame 2 in a forward/rearward direction. A swing arm 6 is disposed behind the power unit 10. The swing arm 6 is vertically swingably axially supported about a pivot shaft 6a in a rear lower section of the vehicle body frame 2.

For example, the vehicle body frame 2 is formed by integrally coupling a steel member through welding or the like. When seen in a side view, the vehicle body frame 2 includes the cylindrical head pipe 20 extending diagonally and vertically so that the front part thereof is disposed more downward as it goes forward, a pair of left and right main frames 21 branched leftward and rightward from an upper rear side of the head pipe 20 and extending rearward and downward, a down frame 22 extending more steeply diagonally rearward and downward from a lower rear side of the head pipe 20 than the main frames 21 along a vehicle body lateral center, a pair of left and right seat frames 23 extending rearward from rear sections of the left and right main frames 21, a pair of left and right pivot frames 24 extending more steeply diagonally rearward and downward from rear end portions of the left and right main frames 21 than the main frames 21 and then extending forward and downward by changing its orientation at bent portions 24a (specifically, portions curved to form rearward convex portions), a pair of left and right sub-frames 25 extending diagonally rearward and upward from the bent portions 24a of the left and right pivot frames 24 toward rear sections of the left and right seat frames 23, a pair of left and right side gussets 26 connected to the head pipe 20, front sections of the left and right main frames 21 and a front section of a lower frame 22, an upper gusset 27 connected to an upper section of the head pipe 20 and front upper sections of the left and right main frames 21, and a lower gusset 28 connected to a lower section of the head pipe 20 and a front lower section of the down frame 22.

The power unit 10 includes a crankcase 11 and a cylinder section 12 protruding forward and upward from a front section of the crankcase 11 when seen in a side view of Fig. 1 (specifically, slightly inclined with respect to a vertical direction so that the upper part thereof is disposed more forward as it goes upward). The front section of the crankcase 11 is attached to a lower end portion of the lower frame 22 via a front engine hanger 13a. A rear upper section of the crankcase 11 is attached to upper end portions of the left and right pivot frames 24 via an upper engine hanger 13b. A rear lower section of the crankcase 11 is attached to lower end portions of the left and right pivot frames 24 via a lower engine hanger 13c.

An intake system (not shown) and an exhaust system 14 are connected to the cylinder section 12. For example, the intake system includes a throttle body (not shown) connected to a rear wall of the cylinder section 12, in communication with the intake port, and configured to adjust an intake air quantity, and an air cleaner (not shown) configured to purify suctioned air to the throttle body and perform suctioning of air to the power unit 10.

The exhaust system 14 includes an exhaust pipe 14a connected to the front wall of the cylinder section 12, in communication with the exhaust port, curved to extend at a right side of the power unit 10 in forward and rearward direction after extending rearward and downward in front of the power unit 10, and then, extending gently diagonally rearward and upward while being curved so as to come around the inner side of the right pivot frame 24 in a vehicle width direction, and a muffler 14b connected to a rear end of the exhaust pipe 14a and extending diagonally rearward and upward at a right upper side of the rear wheel 4.

A fuel tank 8 is attached to the left and right main frames 21 and the left and right seat frames 23. Specifically, left and right side portions of a lower section of the fuel tank 8 are fixed to attachment sections (hereinafter, also referred to as "attachment sections under the fuel tank") of the left and right main frames 21 via a fastening member such as a side bracket, an elastic member such as a rubber bush or the like, a bolt, and the like (not shown). A rear end portion of the fuel tank 8 is fixed to attachment sections (hereinafter, also referred to as "attachment sections behind the fuel tank") of left and right seat rails 23 via a fastening member such as a rear bracket 15, an elastic member such as a rubber bush or the like, a bolt, and the like.

A seat 9 extending forward and rearward along the left and right seat frames 23 is installed behind the fuel tank 8 and above the left and right seat frames 23. Further, in FIG. 1, reference numeral 16 designates a cowl configured to cover the vehicle body frame 2 from the outside in the vehicle width direction, reference numeral 17 designates a pair of left and right front forks disposed on left and right sides of the front wheel 3, reference numeral 18 designates a steering stem configured to support upper sections of the left and right front forks 17 on the head pipe 20, reference numeral 18a designates a bottom bridge of the steering stem 18, reference numeral 18b designates a top bridge of the steering stem 18, reference numeral 50 designates a front fender configured to cover the front wheel 3 from above, reference numeral 51 designates a front cover (a front number plate) disposed at a front upper side of the steering stem 18, and reference numeral 52 designates a traveling air inlet port formed vertically between the front number plate 51 and the front fender 50. For convenience's sake, in FIG. 1, the seat 9 and the cowl 16 are shown by a virtual line (a two-dot chain line).

### <Vehicle body structure of vehicle>

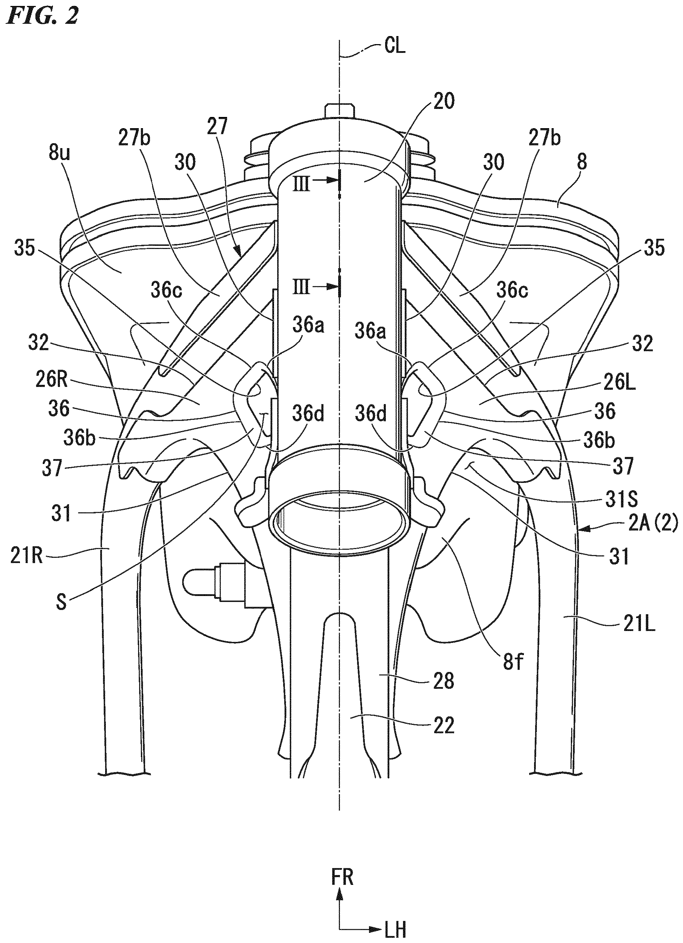

As shown in FIG. 2, the vehicle body frame 2 is formed by integrally coupling a steel member through welding or the like. Hereinafter, in components of the vehicle body frame 2, "L" is added to components disposed on the left side, and "R" is added to components disposed on the right side.

When seen in a front view of FIG. 2, the head pipe 20 is formed in a cylindrical shape extending vertically along a vehicle body lateral centerline CL. When seen in the front view of FIG. 2, the left and right main frames 21L and 21R extend diagonally from the upper rear side of the head pipe 20 to be branched to the left and right sides and disposed more downward as they go outward in the vehicle width direction and then curved to change orientation to extend downward. When seen in the front view of FIG. 2, the down frame 22 extends downward from the lower rear side of the head pipe 20 along the vehicle body lateral centerline CL. When seen in the front view of FIG. 2, the left and right side gussets 26L and 26R are branched from an outer portion of the head pipe 20 in the vehicle width direction to the left and right sides and extend to bridge over a space between the front lower sections of the left and right main frames 21L and 21R and the upper section of the down frame 22.

As shown in FIG. 2, an internal space S in which vehicle components are disposed is formed behind the head pipe 20 and between the left and right side gussets 26L and 26R in the vehicle width direction. The internal space S through which air can pass is able to accommodate vehicle components. That is, the internal space S between the left and right side gussets 26L and 26R in the vehicle width direction is not closed and is in communication with an external space.

### <Side gusset>

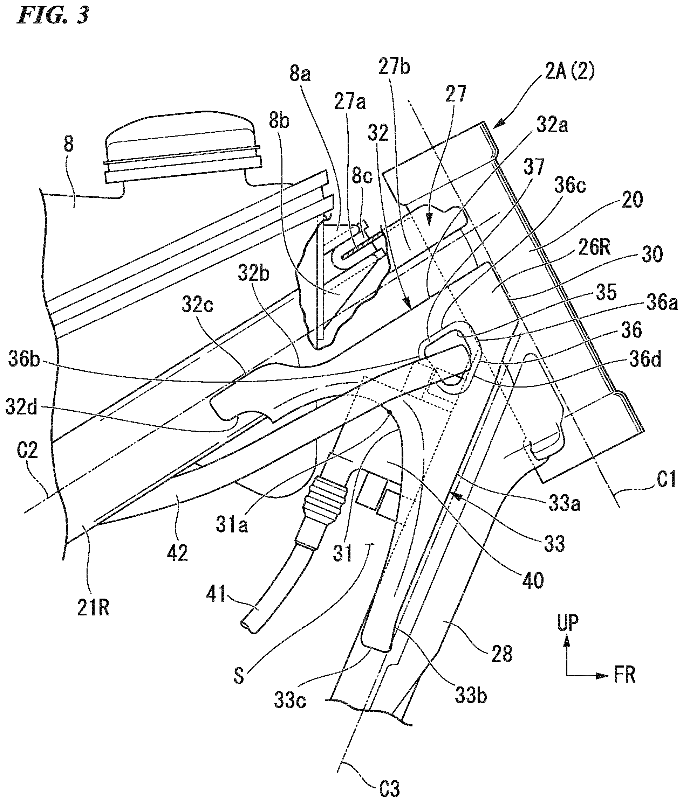

When seen in a side view of FIG. 3, the side gussets 26L and 26R (in FIG. 3, only the right side gusset 26R is shown) are each formed in a V shape protruding forward and upward. When seen in the side view of FIG. 3, the side gussets 26L and 26R include front side sections 30 (hereinafter, referred to as "front ends 30 of the side gussets 26L and 26R" extending diagonally and vertically along a central axis C1 of the head pipe 20 (hereinafter, referred to as a "head pipe axis C1"), rear side sections 31 (hereinafter, referred to as "rear ends 31 of the side gussets 26L and 26R) formed in a convex arc shape (a curved shape) toward the head pipe 20 vertically between the main frames 21L and 21R (in FIG. 3, only the right main frame 21R is shown) and the down frame 22, upper side sections 32 extending along the main frames 21L and 21R to bridge the upper ends of the front side sections 30 and the upper ends of the rear side sections 31, and lower side sections 33 extending along the down frame 22 to bridge the lower ends of the front side sections 30 and the lower ends of the rear side sections 31.

Specifically, when seen in a side view of FIG. 3, the front side section 30 is disposed close to the head pipe axis C1.

When seen in the side view of FIG. 3, the rear side sections 31 have inflection points 31a formed at a position which is middle between the main frames 21L and 21R and the down frame 22 in the vertical direction and which is separated from the head pipe 20 in a rearward and downward direction by about one head pipe 20.

When seen in the side view of FIG. 3, the upper side section 32 is constituted by the front upper side section 32a extending diagonally rearward and downward from the upper end of the front side section 30 along lower edge of the main frames 21L and 21R, upper curved section 32b being curved rearward and upward from rear end of the front upper side section 32a and being curved at position behind the inflection point 31a, the rear upper side section 32c extending rearward and downward from the rear end of the upper curved section 32b until a rear side of the rear side section 31 so as to overlap a central axis C2 of the main frames 21L and 21R (hereinafter, referred to as a "main frame axis C2"), and first lower curved section 32d that extends while being curved forward and downward from the rear end of the rear upper side section 32c and that is connected to the rear end of the rear side section 31.

When seen in the side view of FIG. 3, the lower side section 33 is constituted by the front lower side section 33a extending rearward and downward to be inclined from the lower end of the front side section 30 along a central axis C3 of the down frame 22 (hereinafter, also referred to as a "down frame axis C3"), a second lower curved section 33b curved rearward and downward from the lower end of the front lower side section 33a so as to overlap the down frame axis C3, and a rear curved section 33c that extends while being curved rearward and upward from the lower end of the second lower curved section 33b and that is connected to the lower end of the rear side section 31.

### <Opening section>

As shown in FIG. 2, opening section 35 opening in the forward/rearward direction are formed in the side gussets 26L and 26R. When seen in the side view of FIG. 3, the opening section 35 is disposed between the main frames 21L and 21R and the down frame 22 in an upward/downward direction and disposed between the head pipe 20 and the inflection point 31a in the forward/rearward direction. When seen in the side view of FIG. 3, each of the opening sections 35 has a trapezoidal shape having rounded corner sections.

When seen in the side view of FIG. 3, the opening section 35 has an outer circumferential edge 36 outlined by a front edge 36a extending diagonally and vertically along the head pipe 20, a rear edge 36b disposed rearward of the front edge 36a and extending vertically while being inclined so that the front part thereof is disposed more downward as is goes forward, an upper edge 36c extending diagonally forward and rearward along the main frames 21L and 21R and having the front rear end thereof connected to the upper end of the front edge 36a and the upper end of the rear edge 36b via the rounded corner section, and a lower edge 36d extending diagonally and vertically along the down frame 22 and having the upper lower end thereof connected to the lower end of the front edge 36a and the lower end of the rear edge 36b via the rounded corner section.

When seen in the front view of FIG. 2, the front edges 36a in the outer circumferential edges 36 of the opening sections 35 are disposed further outside in the vehicle width direction than the front end 30 of the side gussets 26L and 26R. When seen in the front view of FIG. 2, the upper edges 36c in the outer circumferential edges 36 of the opening sections 35 are inclined to be disposed more downward as they go outward in the vehicle width direction along the left and right main frames 21L and 21R (specifically, the central axis C2 of the left and right main frames 21L and 21R, see FIG. 3). When seen in the front view of FIG. 2, the rear edges 36b in the outer circumferential edges 36 of the opening sections 35 extend to be inclined so that they are disposed more downward as they go inward in the vehicle width direction.

### <Opening-side flange>

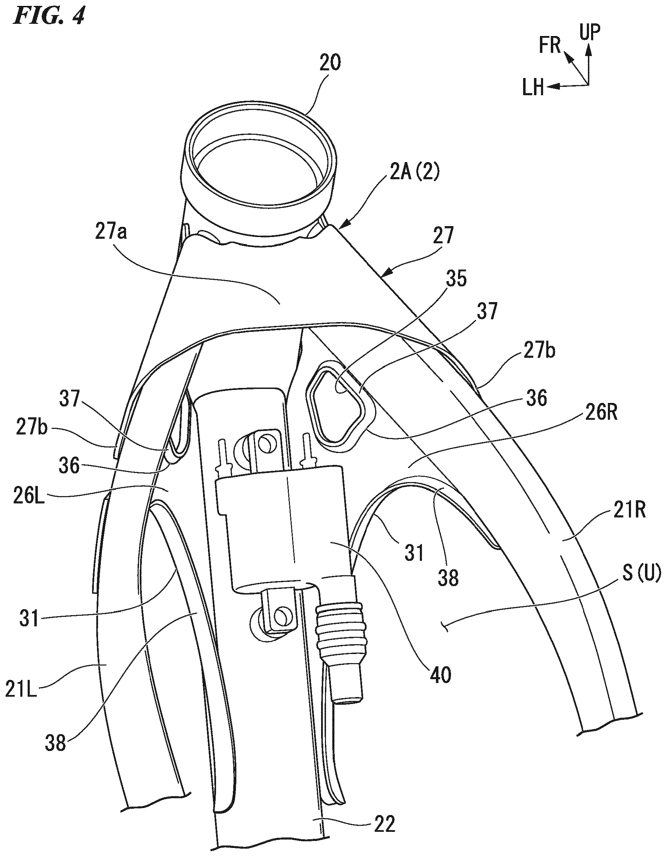

As shown in FIG. 2, opening-side flanges 37 curved inward (specifically, inward in the vehicle width direction) are formed on the outer circumferential edges 36 of the opening sections 35 of the side gussets 26L and 26R. The opening-side flanges 37 are formed in the entire circumferences of the outer circumferential edges 36 of the opening sections 35 of the side gussets 26L and 26R. When seen in the side view of FIG. 3, the opening-side flange 37 has a shape similar to the outer circumferential edge 36 of the opening section 35, and is formed in trapezoidal shape smaller than the outer circumferential edge 36 of the opening section 35. As shown in FIG. 4, inward protrusion height in the vehicle width direction of the opening-side flange 37 is made to be uniform throughout the circumference of the outer circumferential edge 36 of the opening section 35.

### <Rear end flange>

As shown in FIG. 4, rear end flanges 38 curved inward (specifically, inward in the vehicle width direction) are formed on the rear ends 31 of the side gussets 26L and 26R. The rear end flanges 38 are formed throughout both of the rear ends 31 of the side gussets 26L and 26R. Inward protrusion heights in the vehicle width direction of the rear end flanges 38 are uniform throughout both of the rear ends 31 of the side gussets 26L and 26R.

### <Electrical components (vehicle components), harness>

As shown in FIG. 3, an ignition coil 40 (an electrical component) connected to an ignition plug (not shown) installed in an engine via a plug cord 41 is installed in the internal space S between the left and right main frames 21L and 21R and the down frame 22 in the vertical direction. Further, the ignition coil 40 (the electrical component) is one of the vehicle components.

A harness 42 passing through the opening section 35 of the right side gusset 26R and configured to connect the ignition coil 40 and a battery (not shown) is installed on a side portion of the right side gusset 26R. The harness 42 is gently inclined to be disposed more downward as it goes rearward from the opening section 35 of the right side gusset 26R, and then extends to go around of the right main frame 21R in the vehicle width direction.

### <Front frame body>

When seen in the front view of FIG. 2, the left and right side gussets 26L and 26R, the left and right main frames 21L and 21R and the down frame 22 constitute a front frame body 2A having a shape narrowed inward (specifically, inward in the vehicle width direction). When seen in the front view of FIG. 2, the front frame body 2A has a laterally symmetrical shape with respect to the vehicle body lateral centerline CL.

When seen in the front view of FIG. 2, a space 31S is formed as the front frame body 2A is narrowed inward. Specifically, when seen in the front view of FIG. 2, the space 31S is formed as the rear side sections 31 are curved inward and upward in the vehicle width direction.

When seen in the front view of FIG. 2, the fuel tank 8 is installed inside the front frame body 2A. Specifically, when seen in the front view of FIG. 2, a front lower section 8f of the fuel tank 8 is installed inside the front frame body 2A. When seen in the front view of FIG. 2, the front lower section 8f of the fuel tank 8 is installed so as to be exposed to the space 31S. On the other hand, an upper section 8u of the fuel tank 8 extends outward in the vehicle width direction above the front frame body 2A. Further, the fuel tank 8 is one of the vehicle components.

As shown in FIG. 4, an open part U configured to dispose the fuel tank 8 (see FIG. 3) and the ignition coil 40 (hereinafter, also referred as a "vehicle component") in the internal space S and opened in a plurality directions except for a forward direction is formed in the front frame body 2A. In the embodiment, the forward direction of the internal space S is closed by the head pipe 20. The open part U is formed to be open in a rearward direction, a leftward/rightward direction, and an upward direction such that the vehicle components can be disposed in the internal space S.

### <Attachment section (fuel tank attachment section) in front of fuel tank>

As shown in FIG. 3, the fuel tank 8 is formed inside the front frame body 2A to cover the ignition coil 40 from behind. An attachment section 27a in front of the fuel tank to which a front end portion of the fuel tank 8 can be attached is installed on the upper gusset 27 connected to the upper section of the head pipe 20. Further, the attachment section 27a in front of the fuel tank corresponds to a fuel tank attachment section.

As shown in FIG. 4, the upper gusset 27 includes a connecting wall section 27a extending in the vehicle width direction to bridge the left and right main frames 21L and 21R in the vehicle width direction, and lower extension sections 27b extending downward from an outer end of the connecting wall section 27a in the vehicle width direction and connected to an upper rear section of the head pipe 20 and front upper sections of the left and right main frames 21L and 21R.

As shown in FIG. 3, a pair of upper and lower brackets 8a and 8b that opposes each other so as to dispose the connecting wall section 27a of the upper gusset 27 therebetween from above and below, and an elastic member 8c such as a rubber bush or the like formed in a U shape that is opened in forward and upward between the upper and lower brackets 8a and 8b, are installed on the front end portion of the fuel tank 8. In the embodiment, the front end portion of the fuel tank 8 is inserted into and fixed to the connecting wall section 27a of the upper gusset 27 via the upper and lower brackets 8a and 8b and the elastic member 8c without using a fastening member such as a bolt or the like. That is, the connecting wall section 27a of the upper gusset 27 functions as the attachment section 27a in front of the fuel tank.

### <Welded section of side gusset>

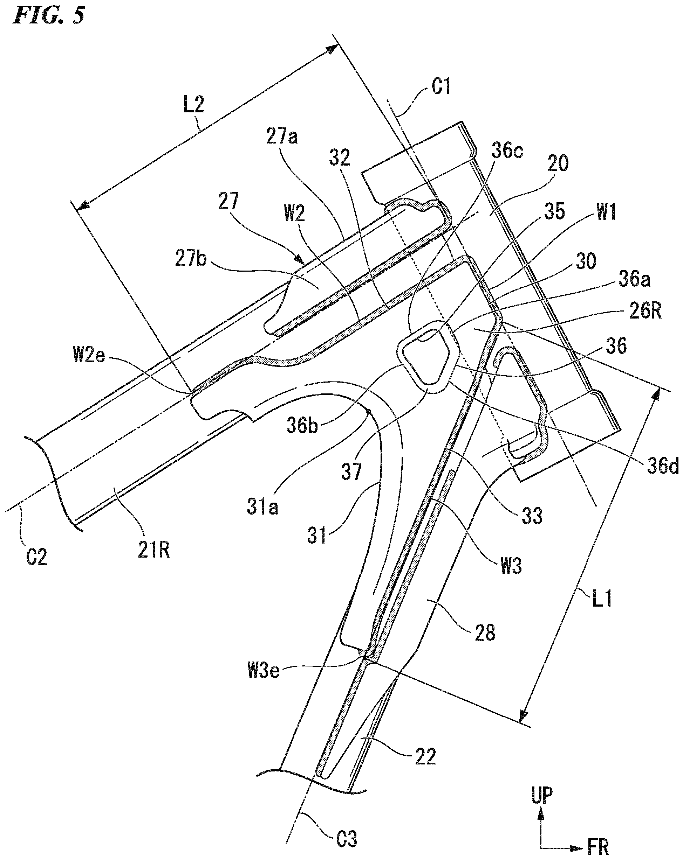

In FIG. 5, a hatched place (a dot-hatched place) shows a welded section. As shown in FIG. 5, the side gussets 26L and 26R (in FIG. 5, only the right side gussets 26R is shown) are welded to the head pipe 20, the main frames 21L and 21R (in FIG. 5, only the right main frame 21R is shown) and the down frame 22 at places except for the rear side sections 31.

Specifically, when seen in a side view of FIG. 5, the front side sections 30 of the side gussets 26L and 26R are welded to the head pipe 20 at a place W1 overlapping the head pipe axis C1.

When seen in the side view of FIG. 5, the upper side sections 32 of the side gussets 26L and 26R extend rearward and downward from the upper ends of the front side sections 30 so as to incline along the lower edges of the main frames 21L and 21R and then curve rearward and upward so as to overlap the main frame axis C2 at a position behind the inflection point 31a, and then, incline along the main frame axis C2 and are welded to the main frames 21L and 21R at a place W2 extending rearward and downward until the rearward of the rear side sections 31.

When seen in the side view of FIG. 5, the lower side sections 33 of the side gussets 26L and 26R are welded to the down frame 22 at a place W3 extending rearward and downward from the lower ends of the front side sections 30 so as to incline along the down frame axis C3.

Here, welded sections of the side gussets 26L and 26R with respect to the main frames 21L and 21R are set as main frame welded sections W2, and welded sections of the side gussets 26L and 26R with respect to the down frame 22 are set as down frame welded sections W3. The main frame welded sections W2 correspond to the welded places W2 of the upper side sections 32 of the side gussets 26L and 26R (specifically, the front upper side section 32a, the upper curved section 32b and the rear upper side section 32c, see FIG. 3). The down frame welded sections W3 correspond to the welded places W3 of the lower side sections 33 of the side gussets 26L and 26R (specifically, the front lower side section 33a and the second lower curved section 33b, see FIG. 3). In the embodiment, the down frame welded section W3 is longer than the main frame welded section W2. In FIG. 5, reference numeral L1 designates a length of the down frame welded section W3, and reference numeral L2 designates a length of the main frame welded section W2 (L1 > L2).

Further, when seen in the side view of FIG. 5, end portions W2e of the main frame welded sections W2 are installed at central sections of the main frames 21L and 21R in the vertical direction (i.e., portions overlapping the main frame axis C2). End portions W3e of the down frame welded sections W3 are installed at central sections of the down frame 22 in the vertical direction (i.e., portions overlapping the down frame axis C3).

As described above, in the embodiment, in the vehicle body structure of the motorcycle 1, the head pipe 20 and the pair of left and right side gussets 26L and 26R connected to the head pipe 20 are provided, the internal space S in which the vehicle components are disposed is formed between the pair of left and right side gussets 26L and 26R in the vehicle width direction, the opening sections 35 opened in the forward/rearward direction are formed in the side gussets 26L and 26R, and the opening-side flanges 37 curved inward in the vehicle width direction are formed on the outer circumferential edges 36 of the opening sections 35 of the side gussets 26L and 26R.

According to the configuration, as the opening sections 35 opened in the forward/rearward direction are formed in the side gussets 26L and 26R, since traveling air (for example, traveling air introduced from the traveling air inlet port 52 formed between the front cover (the front number plate) 51 and the front fender 50 vertically shown in FIG. 1) can be efficiently taken into an inner side (a rear side) of the vehicle, the vehicle components installed between the pair of left and right side gussets 26L and 26R in the vehicle width direction can be cooled without installing an additional air guide member. Accordingly, the traveling air can be utilized for cooling of the vehicle components. In addition, as the internal space S is formed between the pair of left and right side gussets 26L and 26R in the vehicle width direction, the vehicle body structure can be reduced in weight in comparison with the case in which a space between the pair of left and right side gussets 26L and 26R in the vehicle width direction is configured solidly. In addition, as the vehicle components are installed in the internal space S, the vehicle can be reduced in size in comparison with the case in which the vehicle components are installed outside the side gussets 26L and 26R. In addition, the head pipe 20 and the pair of left and right side gussets 26L and 26R can be utilized as protective members for the vehicle components. In addition, as the opening section-side flanges 37 curved inward are formed on the outer circumferential edges 36 of the opening sections 35 of the side gussets 26L and 26R, since a section modulus of the side gussets 26L and 26R can be increased, rigidity of the side gussets 26L and 26R can be improved. In addition, in the embodiment, as the harness 42 is installed to pass through the opening sections 35 of the side gussets 26L and 26R, the opening section-side flanges 37 can be utilized as protective members for the harness 42.

In addition, in the embodiment, as the internal space S has the open part U opened in a rearward direction, a leftward/rightward direction and an upward direction such that the vehicle components can be disposed therein, the vehicle components can be easily disposed in the internal space S through the open part U in comparison with the case in which the internal space S is almost closed (for example, when the internal space S except for a place communicated with the opening sections 35 is closed).

In addition, in the embodiment, as the electrical components (specifically, the ignition coil 40) serving as the vehicle components are installed in the internal space S, traveling air can be utilized for cooling of the electrical components. In addition, as the harness 42 passing through the opening sections 35 of the side gussets 26L and 26R is installed, since the opening sections 35 functions as a harness guide, the number of parts can be reduced without installing an additional guide member of the harness 42.

In addition, in the embodiment, as the rear end flanges 38 curved inward in the vehicle width direction are formed on the rear ends 31 of the side gussets 26L and 26R, since a section modulus of the side gussets 26L and 26R can be increased, rigidity of the side gussets 26L and 26R can be improved.

In addition, in the embodiment, as the rear ends 31 of the side gussets 26L and 26R are formed in an arc shape protruding toward the head pipe 20 when seen in the side view, stress can be attenuated using upward and downward cushioning operations.

In addition, in the embodiment, the pair of left and right main frames 21L and 21R extending rearward from the head pipe 20 while being branched off to left and right sides and the one down frame 22 extending downward from the head pipe 20 are further provided, the main frame welded sections W2 serving as the welded sections of the side gussets 26L and 26R with respect to the pair of left and right main frames 21L and 21R is formed, the down frame welded sections W3 serving as the welded sections of the side gussets 26L and 26R with respect to the down frame 22 is formed, and a length of the down frame welded section W3 is set to be larger than that of the main frame welded section W2. For this reason, since rigidity of the pair of left and right main frames 21L and 21R and the one down frame 22 can be equalized, an input load from the head pipe 20 can be distributed between the main frames 21L and 21R and the down frame 22 with good balance in comparison with the case in which the down frame welded section W3 is smaller than or equal to the main frame welded section W2. In addition, as end portions of the main frame welded sections W2 are formed on upper and lower central sections of the main frames 21L and 21R and end portions of the down frame welded sections W3 are formed on upper and lower central sections of the down frame 22, concentration of stress to edges of the main frames 21L and 21R, an edge of the down frame 22, or the like, can be suppressed.

In addition, in the embodiment, as the fuel tank 8 and the upper gusset 27 connected to the upper section of the head pipe 20 are further provided, the electrical components serving as the vehicle components are installed in the internal space S and the fuel tank 8 is installed to cover the rear side of the electrical components, traveling air can be utilized for cooling of the fuel tank 8 in addition to cooling of the electrical components. In addition, as the attachment section 27a in front of the fuel tank to which the fuel tank 8 can be attached is installed on the upper gusset 27, the upper gusset 27 can be utilized as the attachment section of the fuel tank 8 while being utilized as the protective member for the electrical components. In addition, since a fastening member is unnecessary as the upper gusset 27 has a structure into which the fuel tank 8 is inserted in the attachment section 27a in front of the fuel tank, the number of fastening works can be reduced. That is, since it is sufficient to fasten the fuel tank 8 to only the attachment section below the fuel tank and the attachment section behind the fuel tank, attachment of the fuel tank 8 can be easily performed.

In addition, in the embodiment, the pair of left and right main frames 21L and 21R extending rearward form the head pipe 20 while being branched to left and right sides and the down frame 22 extending downward from the head pipe 20 are further provided, when seen in the front view, the pair of left and right side gussets 26L and 26R, the pair of left and right main frames 21L and 21R and the down frame 22 configure the front frame body 2A having a contour narrowed inward, and when seen in the front view, the front lower section 8f of the fuel tank 8 serving as a vehicle component is formed in the space 31S formed by the inwardly narrowed front frame body 2A so that at least a portion of the fuel tank is exposed. For example, since traveling air can more efficiently butt against the fuel tank 8, the fuel tank 8 can be more efficiently cooled. In addition, as cooling efficiency of the fuel tank 8 is improved, volatilization of fuel can be suppressed while easily disposing the fuel tank 8 and the engine close to each other.

Further, while the example in which the electrical components serving as the vehicle components are installed in the internal space S and the fuel tank 8 is installed to cover the rear side of the electrical components has been described in the embodiment, there is no limitation thereto. For example, only the fuel tank 8 may be installed without installing the electrical components serving as the vehicle components in the internal space S. In addition, parts that are vehicle components except for the electrical components may be installed in the internal space S.

In addition, while the example in which the ignition coil 40 is exemplified as an electrical component installed in the internal space S has been described in the embodiment, there is no limitation thereto. For example, the electrical component may be a bank angle sensor, a capacitor, a regulator, a gyro sensor, an engine control unit (ECU), or the like.

In addition, while the example in which the open part U is opened in the rearward direction, the leftward/rightward direction and the upward direction such that the vehicle components can be disposed in the internal space S has been exemplarily described, there is no limitation thereto. For example, the open part U may be opened in the rearward direction only. That is, the open part U may be opened in at least one direction of the forward/rearward direction, the leftward/rightward direction and the upward direction such that the vehicle components can be disposed in the internal space S.

In addition, while the example in which the front lower section 8f of the fuel tank 8 serving as the vehicle component is formed in the space 31S formed by inwardly narrowed front frame body 2A so that at least a portion of the fuel tank is exposed when seen in the front view has been exemplarily described in the embodiment, there is no limitation thereto. For example, when seen in the front view, the fuel tank 8 may be formed to be exposed to the space 31S as a whole. That is, when seen in the front view, at least a portion of the fuel tank 8 may be formed to be exposed from the space 31S.

In addition, while the example in which one opening section 35 opened in the forward/rearward direction is formed in the side gussets 26L and 26R has been exemplified in the embodiment, there is no limitation thereto. For example, a plurality of opening sections opened in the forward/rearward direction may be formed in the side gussets 26L and 26R.

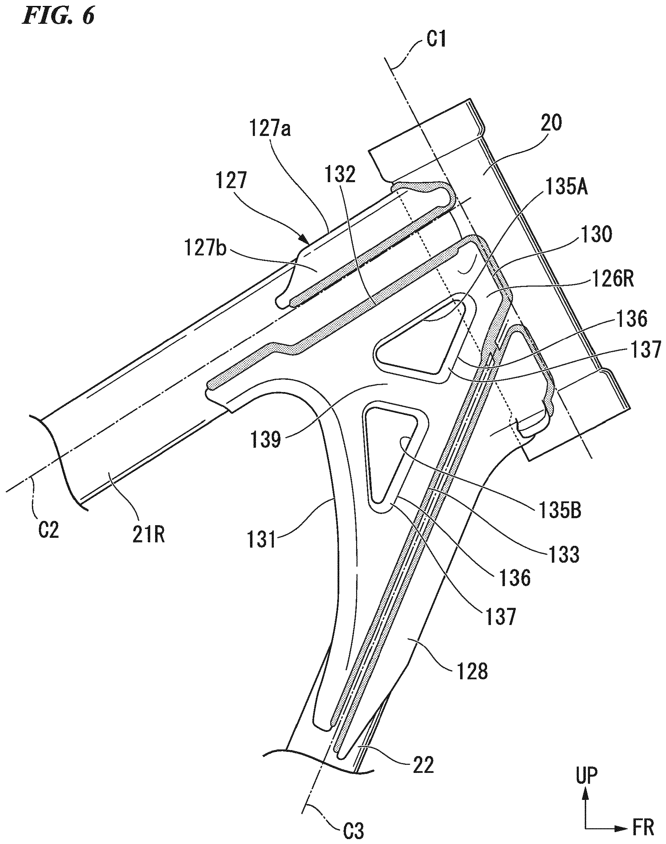

For example, as shown in FIG. 6, two opening sections 135A and 135B are formed in side gussets 126L and 126R (in FIG. 6, only a right side gusset 126R is shown). When seen in a side view of FIG. 6, each of the opening sections 135A and 135B has a triangular shape having rounded corner sections. In FIG. 6, hatched places (dot-hatched places) represent welded sections.

When seen in the side view of FIG. 6, the side gussets 126L and 126R include front side sections 130 extending vertically while being inclined along the head pipe axis C1, rear side sections 131 (hereinafter, also referred to as "rear ends 131 of the side gussets 126L and 126R") formed in an arch shape (a curved shape) protruding toward the head pipe 20 between the main frames 21L and 21R (in FIG. 6, only the right main frame 21R is shown) and the down frame 22 in the vertical direction, upper side sections 132 extending along the main frames 21L and 21R to bridge upper ends of the front side sections 130 and upper ends of the rear side sections 131, and lower side sections 133 extending along the down frame 22 to bridge lower ends of the front side sections 130 and lower ends of the rear side sections 131.

When seen in the side view of FIG. 6, the two opening sections 135A and 135B are disposed with an interval in the vertical direction. In other words, the reinforcement section 139 is installed between the two opening sections 135A and 135B in the vertical direction. When seen in the side view of FIG. 6, reinforcement sections 139 extend forward and rearward to bridge rear sections of the upper side sections 132 (upper end portions of the rear side sections 131) and upper sections of the lower side sections 133 in a forward/rearward direction. Further, in FIG. 6, reference numeral 127 designates an upper gusset connected to an upper section of the head pipe 20 and front upper sections of the left and right main frames 21, and reference numeral 128 designates a lower gusset connected to a lower section of the head pipe 20 and a front lower section of the down frame 22.

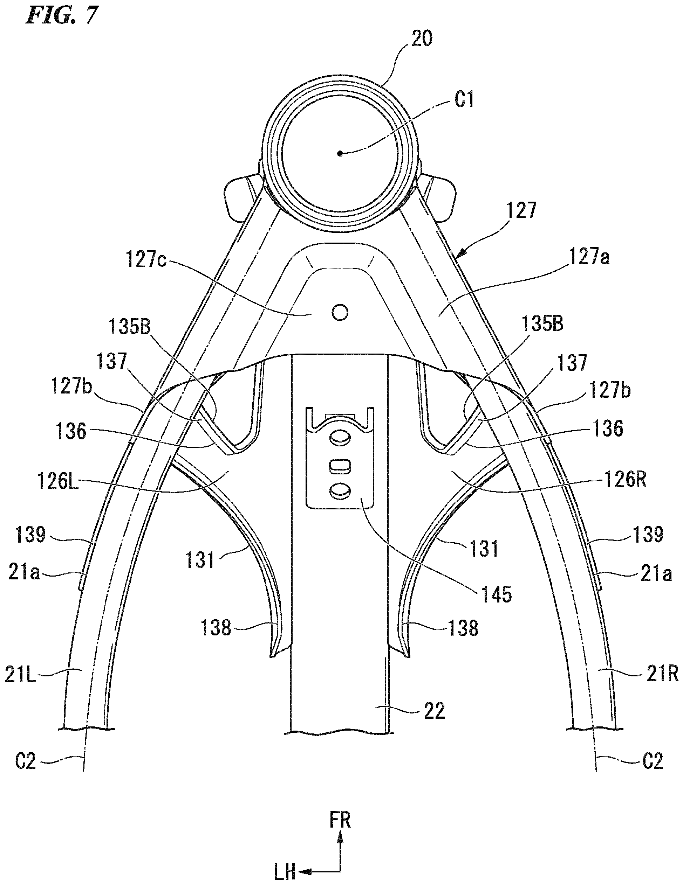

When seen in a plan view of FIG. 7, (specifically, when seen in a direction of the head pipe axis C1), the reinforcement sections 139 are connected to an outer section in the vehicle width direction of the curved section curved outward in the vehicle width direction of the main frames 21L and 21R. In other words, when seen in the direction of the head pipe axis C1, the reinforcement sections 139 are connected to portions of the rear ends 131 of the side gussets 126L and 126R overlapping with the main frame axis C2. These portions where the stress is maximally applied when an input load from the front wheel 3 (see FIG. 1) is received by the main frames 21L and 21R. For this reason, as the reinforcement sections 139 are connected to the portions, the main frames 21L and 21R can be efficiently reinforced that receives a load in a direction opening outward in the vehicle width direction.

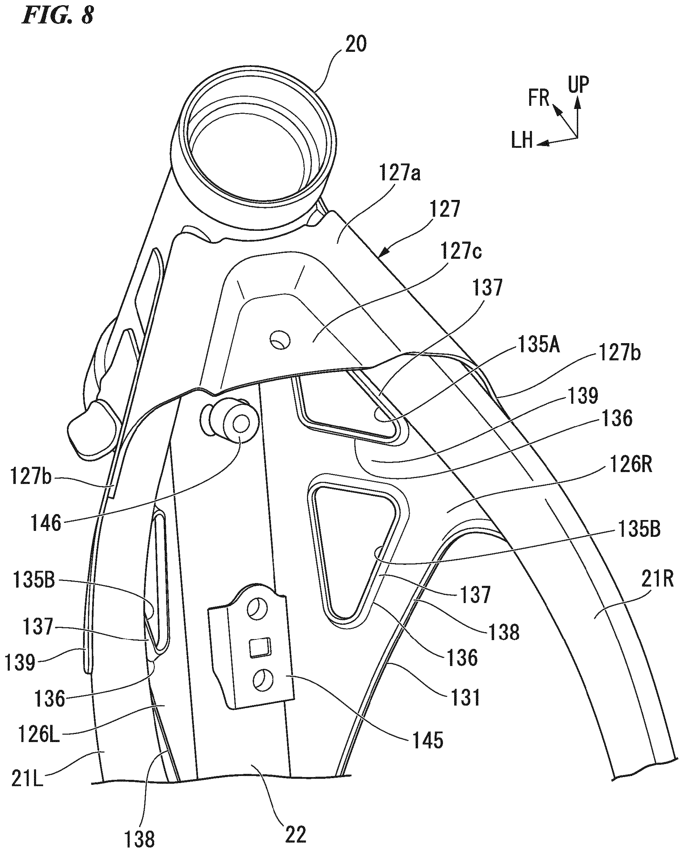

In addition, while the example in which the attachment section 27a (the connecting wall section) in front of the fuel tank has a flat surface has been exemplarily described in the embodiment, there is no limitation thereto. For example, as shown in FIG. 8, an attachment section 127a (a connecting wall section) in front of the fuel tank may have a step portion 127c.

In addition, while the example in which the front end portion of the fuel tank 8 is inserted and fixed to the connecting wall section 27a of the upper gusset 27 via the upper and lower brackets 8a and 8b and the elastic member 8c without using a fastening member such as a bolt or the like has been exemplarily described in the embodiment, there is no limitation thereto. For example, an attachment method of the fuel tank 8 may be insertion or may be fastening.

Further, in FIG. 6 to FIG. 8, reference numeral 127b designates a lower extension section extending downward from an outer end of the connecting wall section 127a in the vehicle width direction and connected to the upper rear section of the head pipe 20 and to the front upper sections of the left and right main frames 21L and 21R, reference numeral 137 designates opening section-side flanges formed throughout the circumferences of outer circumferential edges 136 of the opening sections 135A and 135B of the side gussets 126L and 126R, reference numeral 138 designates rear end flanges curved inward (specifically, inward in the vehicle width direction) at the rear ends 131 of the side gussets 126L and 126R, and reference numerals 145 and 146 designate fixing members of the ignition coil (the electrical component) (not shown).

Further, the present invention is not limited to the embodiment and, for example, all vehicles in which a driver rides while straddling the vehicle body are included as the saddle riding vehicle, and in addition to a motorcycle (including a motorized bicycle and a scooter type vehicle), a three-wheeled vehicle (including a two-front-wheeled and one-rear-wheeled vehicle and a one-front-wheeled and two-rear-wheeled vehicle) is also included. In addition, the present invention is not limited to the motorcycle and may also be applied to a four-wheeled vehicle such as an automobile or the like.

While the engine of the embodiment is the engine including the cylinder section 12 (a forward tilting cylinder) protruding forward and upward, the engine may be an engine including a cylinder section (a rearward tilting cylinder) protruding rearward and upward. In addition, the engine is not limited to a so-called lateral engine in which a crankshaft is installed in the vehicle width direction, and the engine may be a so-called longitudinal engine in which a crankshaft is installed in the forward/rearward direction of the vehicle, and even in this case, disposition of cylinders are various. Further, the power unit 10 may include an electric motor as a driving source.

While preferred embodiments of the invention have been described and illustrated above, it should be understood that these are exemplary of the invention and are not to be considered as limiting. Accordingly, the invention is not to be considered as being limited by the foregoing description, and is only limited by the scope of the appended claims.

## Claims

1. A body structure of a saddle riding vehicle (1) comprising:
a head pipe (20); and
a pair of left and right main frames (21) that extend diagonally from the upper rear side of the head pipe (20) to be branched to left and right sides and disposed more downward as they go outward in a vehicle width direction and then curved to change orientation to extend downward; and
one down frame (22) extending downward from the head pipe (20),
a pair of left and right side gussets (26) that are branched to the left and right sides from an outer portion of the head pipe (20) and that are connected to the pair of left and right main frames (21) and the down frame (22) so as to bridge over a space between front lower sections of the left and right main frames (21) and an upper section of the down frame (20), the left and right side gussets (26) including rear side sections (31) formed in a convex arc shape toward the head pipe (20) when seen in a side view and curved upward when seen in a front view, said side gussets include front sections (30) extending diagonally and vertically along a central axis (C1) of the head pipe (20), upper side sections (32) extending along the main frames (21L, 21R) to bridge the upper ends of the front side sections (30) and the upper ends of the rear side sections (31), and lower side sections (33) extending along the down frame (22) to bridge the lower ends of the front side sections (30) and the lower ends of the rear side sections (31),
wherein an internal space (S) in which a vehicle component is disposed is formed between the pair of left and right side gussets (26) in a vehicle width direction,
an opening section (35) opened in a forward/rearward direction is formed in the side gusset (26), and
an opening section-side flange (37) curved inward in the vehicle width direction towards the internal space (S) is formed at an outer circumferential edge (36) of the opening section (35) of the side gusset (26) so as to guide a traveling air towards the vehicle component installed in the internal space (S).

2. The body structure of a saddle riding vehicle according to claim 1,
wherein the internal space (S) has an open part (U) opened in at least one of the forward/rearward direction, a leftward/rightward direction, and an upward direction such that the vehicle component is able to be disposed therein.

3. The body structure of a saddle riding vehicle according to claim 1 or 2,
wherein an electrical component (40) serving as the vehicle component is installed in the internal space (S), and
a harness (42) is installed so as to pass through the opening section (35) of the side gusset (26).

4. The body structure of a saddle riding vehicle according to any one of claims 1 to 3,
wherein a rear end flange (38) curved inward in the vehicle width direction is formed on the rear end (31) of the side gusset (26).

5. The body structure of a saddle riding vehicle according to any one of claims 1 to 4,
wherein a main frame welded section (W2) serving as a welded section of the side gusset (26) with respect to the pair of left and right main frames (21) is formed,
a down frame welded section (W3) serving as a welded section of the side gusset (26) with respect to the down frame (22) is formed, and
a length of the down frame welded section (W3) is larger than that of the main frame welded section (W2).

6. The body structure of a saddle riding vehicle according to any one of claims 1 to 5, further comprising:
a fuel tank (8); and
an upper gusset (27) connected to an upper section of the head pipe (20),
wherein an electrical component (40) serving as the vehicle component is installed in the internal space (S),
the fuel tank (8) is installed to cover a rear side of the electrical component (40), and
a fuel tank attachment section (27a) to which the fuel tank (8) is attachable is formed on the upper gusset (27).

## Patentansprüche

1. Karosseriestruktur eines Sattel-Fahr-Fahrzeugs (1), umfassend:
ein Kopfrohr (20); und
ein Paar eines linken und eines rechten Hauptrahmens (21), welche sich derart diagonal von der oberen Rückseite des Kopfrohrs (20) erstrecken, dass sie zu einer linken und einer rechten Seite abgezweigt sind und mehr nach unten angeordnet sind, wenn sie in einer Fahrzeugbreitenrichtung nach außen verlaufen und dann derart gebogen sind, dass sie derart eine Ausrichtung ändern, dass sie sich nach unten erstrecken; und
einen Abwärtsrahmen (22), welcher sich von dem Kopfrohr (20) nach unten erstreckt,
ein Paar eines linken und eines rechten Seitenstützblechs (26), welche von einem äußeren Abschnitt des Kopfrohrs (20) nach links und rechts abgezweigt sind und mit dem Paar des linken und rechten des Hauptrahmens (21) und dem Abwärtsrahmen (22) verbunden sind, um einen Abstand zwischen vorderen Unterbereichen des linken und des rechten Hauptrahmens (21) und einem oberen Bereich des Abwärtsrahmens (22) zu überbrücken, wobei das linke und das rechte Seitenstützblech (26) hintere Seitenbereiche (31) umfassen, welche in einer konvexen Bogenform in Richtung des Kopfrohrs (20) gebildet sind, wenn sie in einer Seitenansicht betrachtet werden und aufwärts gebogen sind, wenn sie in einer Vorderansicht betrachtet werden, wobei die Seitenstützbleche Vorderbereiche (30), welche sich diagonal und vertikal entlang einer Mittelachse (C1) des Kopfrohrs (20) erstrecken, obere Seitenbereiche (32), welche sich entlang der Hauptrahmen (21L, 21R) erstrecken, um die oberen Enden der vorderen Seitenbereiche (30) und die oberen Enden der hinteren Seitenbereiche (31) zu überbrücken, und untere Seitenbereiche (33) umfassen, welche sich entlang des Abwärtsrahmens (22) erstrecken, um die unteren Enden der vorderen Seitenbereiche (30) und die unteren Enden der hinteren Seitenbereiche (31) zu überbrücken,
wobei ein Innenraum (S), in welchem ein Fahrzeugbauteil angeordnet ist, zwischen dem Paar des linken und des rechten Seitenstützblechs (26) in einer Fahrzeugbreitenrichtung gebildet ist,
ein Öffnungsbereich (35), welcher in einer Vorwärts-/Rückwärtsrichtung geöffnet ist, in dem Seitenstützblech (26) gebildet ist, und
ein Öffnungsbereich-Seitenflansch (37), welcher in der Fahrzeugbreitenrichtung in Richtung des Innenraums (S) nach innen gebogen ist, an einem äußeren Umlaufrand (36) des Öffnungsbereichs (35) des Seitenstützblechs (26) derart gebildet ist, dass er einen Fahrtwind in Richtung des Fahrzeugbauteils leitet, welches in dem Innenraum (S) installiert ist.

2. Karosseriestruktur eines Sattel-Fahr-Fahrzeugs nach Anspruch 1,
wobei der Innenraum (S) einen offenen Teil (U) aufweist, welcher in wenigstens einer aus der Vorwärts-/Rückwärtsrichtung, einer Links-/Rechtsrichtung und einer Aufwärtsrichtung derart geöffnet ist, dass das Fahrzeugbauteil in der Lage ist, darin angeordnet zu sein.

3. Karosseriestruktur eines Sattel-Fahr-Fahrzeugs nach Anspruch 1 oder 2,
wobei ein elektrisches Bauteil (40), welches als das Fahrzeugbauteil dient, in dem Innenraum (S) installiert ist, und
ein Kabelstrang (42) derart installiert ist, dass er durch den Öffnungsbereich (35) des Seitenstützblechs (26) verläuft.

4. Karosseriestruktur eines Sattel-Fahr-Fahrzeugs nach einem der Ansprüche 1 bis 3,
wobei ein hinterer Endflansch (38), welcher in der Fahrzeugbreitenrichtung nach innen gebogen ist, an dem hinteren Ende (31) des Seitenstützblechs (26) gebildet ist.

5. Karosseriestruktur eines Sattel-Fahr-Fahrzeugs nach einem der Ansprüche 1 bis 4,
wobei ein Hauptrahmen-Schweißbereich (W2), welcher als ein Schweißbereich des Seitenstützblechs (26) dient, in Bezug auf das Paar des linken und des rechten Hauptrahmens (21) gebildet ist,
ein Abwärtsrahmen-Schweißbereich (W3), welcher als ein Schweißbereich des Seitenstützblechs (26) dient, in Bezug auf den Abwärtsrahmen (22) gebildet ist, und
eine Länge des Abwärtsrahmen-Schweißbereichs (W3) größer als diejenige des Hauptrahmen-Schweißbereichs (W2) ist.

6. Karosseriestruktur eines Sattel-Fahr-Fahrzeugs nach einem der Ansprüche 1 bis 5, ferner umfassend:
einen Kraftstoffbehälter (8); und
ein oberes Stützblech (27), welches mit einem oberen Bereich des Kopfrohrs (20) verbunden ist,
wobei ein elektrisches Bauteil (40), welches als das Fahrzeugbauteil dient, in dem Innenraum (S) installiert ist,
der Kraftstoffbehälter (8) derart installiert ist, dass er eine hintere Seite des elektrischen Bauteils (40) abdeckt, und
ein Kraftstoffbehälter-Anbringungsbereich (27a), an welchen der Kraftstoffbehälter (8) anbringbar ist, an dem oberen Stützblech (27) gebildet ist.

## Revendications

1. Structure de carrosserie d'un véhicule à selle (1) comprenant :
un tube de tête (20) ; et
une paire de châssis principaux gauche et droit (21) qui s'étendent en diagonale depuis le côté arrière supérieur du tube de tête (20) pour bifurquer vers des côtés gauche et droit et disposés davantage vers le bas à mesure qu'ils vont vers l'extérieur dans une direction de largeur de véhicule, puis courbés pour changer d'orientation afin de s'étendre vers le bas ; et
un châssis bas (22) s'étendant vers le bas depuis le tube de tête (20),
une paire de goussets de côtés gauche et droit (26) qui bifurquent vers les côtés gauche et droit depuis une portion externe du tube de tête (20) et qui sont raccordés à la paire de châssis principaux gauche et droit (21) et au châssis bas (22) de façon à enjamber un espace entre des sections inférieures avant des châssis principaux gauche et droit (21) et une section supérieure du châssis bas (20), les goussets de côtés gauche et droit (26) comportant des sections de côté arrière (31) formées avec une forme d'arc convexe vers le tube de tête (20), dans une vue de côté et courbée vers le haut dans une vue de face, lesdits goussets de côtés comportent des sections avant (30) s'étendant en diagonale et verticalement selon un axe central (C1) du tube de tête (20), les sections de côté supérieur (32) s'étendant le long des châssis principaux (21L, 21R) pour relier les extrémités supérieures des sections avant (30) et les extrémités supérieures des sections de côté arrière (31), et des sections de côté inférieur (33) s'étendant le long du châssis bas (22) pour relier les extrémités inférieures des sections de côté avant (30) et les extrémités inférieures des sections de côté arrière (31),
dans laquelle un espace interne (S) dans lequel est disposé un composant de véhicule est formé entre la paire de goussets de côtés gauche et droit (26) dans une direction de largeur de véhicule,
une section d'ouverture (35) ouverte dans une direction vers l'avant/vers l'arrière est formée dans le gousset de côtés (26), et
une bride côté section d'ouverture (37) courbée vers l'intérieur dans la direction de largeur de véhicule vers l'espace interne (S) est formée au niveau d'un bord circonférentiel externe (36) de la section d'ouverture (35) du gousset de côtés (26) de façon à guider un déplacement d'air vers le composant de véhicule installé dans l'espace interne (S).

2. Structure de carrosserie d'un véhicule à selle selon la revendication 1,
dans laquelle l'espace interne (S) a une partie ouverte (U) qui est ouverte dans au moins l'une parmi la direction vers l'avant/vers l'arrière, une direction vers la gauche/vers la droite, et une direction vers le haut de sorte que le composant de véhicule soit capable d'y être disposé.

3. Structure de carrosserie d'un véhicule à selle selon la revendication 1 ou 2,
dans laquelle le composant électrique (40) servant de composant de véhicule est installé dans l'espace interne (S), et
un faisceau (42) est installé de façon à passer à travers la section d'ouverture (35) du gousset de côtés (26).

4. Structure de carrosserie d'un véhicule à selle selon l'une quelconque des revendications 1 à 3,
dans laquelle une bride d'extrémité arrière (38) courbée vers l'intérieur dans la direction de largeur de véhicule est formée sur l'extrémité arrière (31) du gousset de côtés (26).

5. Structure de carrosserie d'un véhicule à selle selon l'une quelconque des revendications 1 à 4,
dans laquelle une section soudée aux châssis principaux (W2) servant de section soudée du gousset de côtés (26) vis-à-vis de la paire de châssis principaux gauche et droit (21) est formée,
une section soudée au châssis bas (W3) servant de section soudée du gousset de côtés (26) vis-à-vis du châssis bas (22) est formée, et
une longueur de la section soudée au châssis bas (W3) est plus grande que celle de la section soudée aux châssis principaux (W2).

6. Structure de carrosserie d'un véhicule à selle selon l'une quelconque des revendications 1 à 5, comprenant en outre :
un réservoir de carburant (8) ; et
un gousset supérieur (27) raccordé à une section supérieure du tube de tête (20),
dans laquelle un composant électrique (40) servant de composant de véhicule est installé dans l'espace interne (S),
le réservoir de carburant (8) est installé pour couvrir un côté arrière du composant électrique (40), et
une section d'attache de réservoir de carburant (27a) à laquelle le réservoir de carburant (8) peut être attaché est formée sur le gousset supérieur (27).
